## Europäisches Patentamt
## European Patent Office
## Office européen des brevets

(19)

(11) Veröffentlichungsnummer : **0 027 633**
**B1**

(12)

# EUROPÄISCHE PATENTSCHRIFT

(45) Veröffentlichungstag der Patentschrift :
01.09.82

(21) Anmeldenummer : 80106278.7

(22) Anmeldetag : 15.10.80

(51) Int. Cl.³ : **C 04 B 43/00, F 16 L 59/04**

(54) Verfahren zur Herstellung eines Wärmeisolierkörpers.

(30) Priorität : **18.10.79 DE 2942180**

(43) Veröffentlichungstag der Anmeldung :
**29.04.81 (Patentblatt 81/17)**

(45) Bekanntmachung des Hinweises auf die Patenterteilung : **01.09.82 Patentblatt 82/35**

(84) Benannte Vertragsstaaten :
**AT BE CH FR GB IT LI NL SE**

(56) Entgegenhaltungen :
EP A 0 013 387
DE A 2 748 307
DE B 1 671 186
DE B 2 422 384

(73) Patentinhaber : **Grünzweig + Hartmann und Glasfaser AG**
**Bürgermeister-Grünzweig-Strasse 1-47**
**D-6700 Ludwigshafen am Rhein (DE)**

(72) Erfinder : **Kummermehr, Hans**
**Prinzregentenstrasse 25a**
**D-6700 Ludwigshafen (DE)**

(74) Vertreter : **KUHNEN & WACKER Patentanwaltsbüro**
**Schneggstrasse 3-5 Postfach 1729**
**D-8050 Freising (DE)**

Imprimerie Jouve, 18, rue St-Denis, 75001 Paris, France

## Verfahren zur Herstellung eines Wärmeisolierkörpers

Die Erfindung betrifft ein Verfahren zur Herstellung eines Wärmeisolierkörpers aus einem hochdispersen Isoliermaterial, Trübungsmittel, verstärkendem Fasergemisch und ggfs. einem Bindemittel, wobei diese Materialien gemischt und verfestigt werden.

Aus der DE-B 16 71 186 ist ein Verfahren zur Herstellung eines Wärmeisoliermaterials bekannt, bei dem ein Gemisch auf der Grundlage von Aerogel-Teilchen und anorganischen Fasern verformt wird. Dieses Gemisch besteht aus Siliciumdioxid — bzw. Kieselerde — Aerogel-Teilchen und keramischen Aluminiumsilikat — oder Kohlenstoff-Fasern oder deren Gemischen. Zur Durchmischung dieser Materialien bringt man diese in einen Behälter ein, in dessen Bodenbereich ein Drehflügel angeordnet ist. Nach dem Schließen des Behälters wird das Material durch Drehen des Drehflügels verwirbelt und somit innig vermischt. Dem Aerogel- und Fasermaterial wird in einer bevorzugten Ausführungsform vor dem Vermischen ein Trübungsmaterial zugesetzt. Anschließend werden die gesamten Materialien dem Mischvorgang in dem einen Drehflügel enthaltenden Behälter unterzogen.

Die Kieselsäure-Aerogel-Teilchen besitzen in der Regel einen Teilchendurchmesser unter 1 µm und besitzen infolge ihrer großvolumigen Struktur eine geringe Dichte. Da ein derartiges Wärmeisoliermaterial meistens zu mehr als 50 Gew.% aus diesem Aerogel besteht, ist nahezu das gesamte Raumvolumen des aus dem Wärmeisoliermaterial hergestellten Körpers mit den Aerogel-Teilchen und diese umgebender Luft angefüllt, wobei die Faserstoffe und das Trübungsmittel volumenmäßig kaum ins Gewicht fallen.

Bei Mischversuchen hat sich nunmehr gezeigt, daß es äusserst schwierig ist, ein aus mehr als 50 Gew.% Aerogelteilchen enthaltendes Gemisch herzustellen, das außerdem Verstärkungsfasermaterial und/oder Trübungsmittel enthält. Werden nämlich relativ geringe Mengen Trübungsmittel und/oder Fasermaterial zu einer großen Menge Aerogel-Material zugesetzt, so ist häufig auch nach einem mehrstündigen Rühren kein einheitliches Gemisch zu erhalten. Der Drehflügel kann nämlich nur eine Durchmischung in einem beschränkten Bereich erzeugen. Dagegen bewegt sich die über dem Drehflügel befindliche Materialmenge nur sehr langsam und zögernd nach unten, um dort durchgemischt zu werden. Es kommt daher häufig vor, daß der bei hoher Drehgeschwindigkeit laufende Drehflügel durch das Durchmischen heiß wird, andererseits jedoch nich ein zufriedenstellendes Mischungsergebnis liefern kann. Durch eine derartige inhomogene Durchmischung leidet natürlich die Qualität des Endproduktes, dessen Wärmeleitzahlen und Wärmereflexionsfähigkeit nachteilig beeinflußt werden.

Der Erfindung liegt deshalb die Aufgabe zugrunde, ein Verfahren zur Herstellung eines Wärmeisolierkörpers zu schaffen, das in einfachster Form und mit einfachen Hilfsmitteln eine homogene Mischung aus Isoliermittelteilchen, Fasergemischen und/oder Trübungsmittelteilchen schafft, auch wenn der Isoliermaterialanteil an diesen Materialien über 50 Gew.% liegt.

Diese Aufgabe wird erfindungsgemäß dadurch gelöst, daß das Trübungsmittel und/oder das verstärkende Fasergemisch mit einem Dispergiermittel zu einem Vorgemisch vermischt werden, welches anschließend mit den restlichen Materialien weiter vermischt wird.

Vermischt man Trübungsmittel und/oder die verstärkenden Fasergemische mit dem Dispergiermittel und bringt das erhaltene Vorgemisch mit den feinen Isoliermittelteilchen, die den überwiegenden Teil der Endmischung darstellen, zusammen, so kann man überraschenderweise feststellen, daß sich das Vorgemisch sehr leicht in der Isoliermittelmasse auflöst. Dies ist wohl darauf zurückzuführen, daß das Dispergiermittel die Agglomerate, die die Trübungsmittel und/oder die Fasern gebildet haben, auflöst und anschließend auf Abstand hält. Diese Agglomerate sind nur bei sehr sorgfältiger Behandlung aufzulösen, da die zwischen den einzelnen Teilchen wirkenden und die Agglomerate bildenden Kräfte durch dispergierend wirkende Behandlung und/oder Substanzen aufgelöst werden können. Durch Trennung der einzelnen Trübungsmittelteilchen oder Faserbestandteile ist eine weitere Vermischung mit hochvolumigen Teilchen, die ebenfalls zur Agglomerierung neigen, sehr erleichtert, da sich diese hochvolumigen Teilchen bzw. aus ihnen bestehende Agglomerate zwischen die einzelnen, auf Abstand gehaltenen Trübungsmittelteilchen und/oder Faserbestandteile schieben können. Von besonderem Vorteil ist es, wenn das Dispergiermittel und das Isoliermaterial identisch sind, da die bereits im Vorgemisch erfolgte Trennung eine äußerst leichte Auflösung des Trübungsmittels und/oder Fasermaterials in der Isoliermittelmasse bewirkt, was letztlich auf eine Verdünnung dieser Materialien hinausläuft.

Als Trübungsmittel, das zur Erhöhung des Wärmereflexionsvermögens zugegeben wird, kommen entweder organische oder anorganische Verbindungen in Frage, die die thermische Strahlung streuen, absorbieren oder reflektieren können, wobei bei der Wahl der Substanzen auf die Einsatztemperatur geachtet werden muß. Die Korngröße dieser Trübungsmittel liegt üblicherweise in einem Bereich von 0,5 bis 20 µm, vorzugsweise 1 bis 10 µm, wobei das Maximum der Häufigkeitsverteilung zwischen 2,5 und 5 µm liegen soll. Zu einsetzbaren Trübungsmitteln gehören Graphit und Ruß, sofern die Temperatur nicht zu hoch ist, anorganische Oxide von Titan, die ggfs. Eisen (III)-Oxid enthalten können (Ilmenit), Rutil, Chromoxid, Manganoxid, Eisenoxid sowie Karbide des Siliciums, Bors, Tantals oder Wolframs oder deren Gemische. Weiterhin lassen sich metallisches Aluminium, Wolfram oder Silicium, Zirkon, Titandioxid oder Bleimonoxid sowie weitere Stoffe einsetzen, die einen hohen Wärmereflexions- oder IR-Refraktionsindex besitzen. Diese Trübungsmittel können bis zu einer Menge von 60 Gew.% in dem Wärmeisolierkörper vorliegen. Die eingesetzte Trübungsmittelmenge wird dabei nach der auftretenden Wärmestrahlung gewählt, wobei die eingesetzte Trübungsmittelmenge mit steigender Temperatur ebenfalls ansteigt. Das Trübungsmittel besitzt außerdem den Vorteil, daß es wegen seiner im Vergleich zum Isoliermittel großen Korngröße große Zwischenbereiche aufzufüllen vermag, so daß hierdurch die thermische Leitfähigkeit des Endprodukts verringert und somit die thermische Qualität verbessert wird.

Besonders bevorzugt ist Ilmenit $FeTiO_3$ als Trübungsmittel, da dies sehr billig und außerdem leicht vermahlbar ist. Dieses Trübungsmittel kann mit chemischgebundenem Mangan (Mn) verunreinigt sein.

Als verstärkend wirkende Fasern können sämtliche organische oder anorganischen Fasern eingesetzt werden, die die mechanischen Eigenschaften des Wärmeisolierkörpers, insbesondere die Oberflächenhafteigenschaften verbessern. Zu derartigen Fasern gehören Mineralfasern, beispielsweise Basaltfasern oder Glasfasern, Asbestfasern, Aluminiumsilikatfasern, synthetische organische Fasern auf der Basis von Polyamiden, Polyacrylsäure, Viscose. Der Faserdurchmesser soll dabei in einem Bereich von 1 bis 20, insbesondere 5 bis 10 μm liegen. Die Länge dieser Fasern liegt im allgemeinen bei einigen mm bis einigen cm. Diese Verstärkungsfasern können bis zu einer Menge von 40 Gew.% dem Gemisch zugesetzt werden.

Als Dispergiermittel können hydrophobierte Substanzen anorganischer oder organischer Art eingesetzt werden, beispielsweise hydrophobierte Kieselsäure, pyrogene Kieselsäure oder Polymerisate, wie Polytetrafluoräthylen, wobei die Kieselsäuren aus Kostengründen bevorzugt sind.

Dieses Dispergiermittel, dessen Korngröße selbst unter 1 μm liegt, wird mit dem Trübungsmittel in einem Gewichtsverhältnis von 2 : 98 bis 30 : 70, vorzugsweise 10 : 90 unter Bildung eines Vorgemisches innig vermischt. Dieses Vorgemisch wird mit den anderen Bestandteilen des Wärmeisolierkörpers solange in einem Mischer vermengt, bis eine gleichförmige und äußerst feine Verteilung dieser Bestandteile gewährleistet ist. Das Dispergiermittel dient hierbei als Abstandshalter zu den übrigen Bestandteilen des Wärmeisolierkörpers, so daß die einzelnen Bindemittelteilchen ohne Agglomerieren gleichförmig verteilt in der Isoliermasse vorliegen. Somit dient also das Dispergiermittel nicht nur als Abstandshalter zu den einzelnen Isoliermittelteilchen, sondern auch als Mischhilfe.

Sofern das Trübungsmittel noch auf die gewünschte Korngröße gemahlen werden soll, kann dies in Anwesenheit des Dispergiermittels erfolgen, da hierdurch die Agglomeratbildung wirksam verhindert wird. Es wird dabei vor dem Einverleiben in das Isoliermaterial mit dem Dispergiermittel innig vermischt und anschließend auf die gewünschte Korngröße gemahlen.

Als teilchenförmiges Isoliermaterial können Pulver- oder Faserteilchen oder deren Gemische in Frage kommen. Dabei kann es sich um Agglomerate von fein verteilten Teilchen mit einer Korngröße unter 0,1 μm handeln, die eine röhrenförmige oder poröse Struktur besitzen. Zu derartigen Isolierstoffen gehören Quarz- oder Glasfasern, Aluminiumsilikatfasern sowie weitere keramische Fasern, pulverförmiges Aluminium oder Gemische aus Flugasche mit expandierter Kieselerde, feinteiliges Aluminium- oder Chromoxid und Aerogele, beispielsweise von Kieselsäure, Chromoxid, Thoriumoxid, Magnesiumhydrat, Aluminiumoxid oder deren Gemische.

Diese Aerogele können erfindungsgemäß nicht nur als Isoliermaterial, sondern auch als Dispergiermittel eingesetzt werden, sofern sie eine aggregatspaltende Struktur besitzen oder hydrophobiert sind.

Weiterhin gehört zu derartigen Isolierstoffen die pyrogene Kieselsäure, die aus der chemischen Zersetzung von Siliciumtetrachlorid entsteht. Die Größe dieser Teilchen liegt in einem Bereich von 10 Å-2 mm, insbesondere unterhalb 1 μm. Im allgemeinen besteht der Wärmeisolierkörper bis zu 95 % aus diesem Isoliermaterial, wobei bevorzugt 30 bis 85 % Isoliermaterial eingesetzt werden.

Würde der nach dem Mischen und Verfestigen dieser Materialien erhaltene Wärmeisolierkörper einer üblichen Beanspruchung ausgesetzt, so wäre festzustellen, daß dieser infolge seiner ungünstigen mechanischen Eigenschaften nicht einsetzbar wäre. Infolgedessen muß der Körper in eine Umschließung, beispielsweise einen Sack eingeschlossen werden, oder aber mit speziellen Bindemitteln gehärtet werden, um die gewünschte mechanische Steifigkeit und Festigkeit zu erhalten.

Als Bindemittel können sämtliche anorganische oder organische Bindemittel eingesetzt werden, die durch Mahlen in eine Korngröße unter 1 μm überführt werden können und unterhalb 700 °C erweichen bzw. schmelzen, wodurch sie eine Verbindung mit den umgebenden isoliermaterialteilchen eingehen können. Das Vermahlen dieser Bindemittelteilchen auf eine Korngröße im Bereich von 1 μm oder darunter läßt Bindemittelteilchen entstehen, die bei einer gleichförmigen Verteilung im Isolierkörper eine hohe mechanische Beständigkeit erzeugen. Die obere Temperaturgrenze von ca. 700 °C ist deshalb zu beachten, weil oberhalb dieser Temperaturgrenze die Isoliermaterialteilchen zu sintern beginnen und dadurch die wärmedämmende Eigenschaft des Isolierkörpers verloren geht.

Zu Bindemitteln auf anorganischer Basis gehören niederschmelzende Gläser, glasbildende Stoffe, Glaslote, Phosphate, Sulfate, Carbonate, Hydroxide oder Oxide der Alkali- oder Erdalkalimetalle, Natriumsilikate, Borate, Borax, Natriumperborat und deren Gemische. Vorzugsweise wird Soda oder Natriumsulfat eingesetzt, wobei diesem Natriumsulfat zur Reduzierung etwas feinkörniger Ruß beigegeben wird.

Beispiele für Bindemittel auf organischer Basis sind Harze vom Phenol-Formaldehydtyp, Harnstoff-Formaldehydtyp, thermisch erweichbare Harze, wie PVC-Harze oder Kopolymere von Vinylchlorid und Vinylacetat, Granulate von Polyurethan, Polyamiden, Polyäthylen, Siliconharze und dgl. Vorzugsweise werden feinst gemahlene Formaldehydharze oder Methylsiliconharze eingesetzt.

Im allgemeinen wird die Menge des eingesetzten Bindemittels an Hand der gewünschten Steifigkeit und Biegefähigkeit der Platte bestimmt, wobei es regelmäßig ausreicht, wenn die Platte durch den Zusatz des Bindemittels abriebfest wird. Üblicherweise wird das Bindemittel deshalb in einer Menge von 2-30 Gew.%, insbesondere 5-10 Gew.%, bezogen auf das Isoliermittel, eingesetzt.

Andererseits kann das verpresste Gemisch auch in eine Umhüllung eingebracht werden, welche beispielsweise in der DE-B 19 54 992 beschrieben ist. In der Umschließung steht der Wärmeisolierkörper derart unter Druck, daß er hohen mechanischen Belastungen gewachsen ist und trotzdem gute Wärmeisoliereigenschaften besitzt.

In dem erfindungsgemäßen Verfahren zur Herstellung des Wärmeisolierkörpers wird das Vorgemisch dadurch hergestellt, daß man des Trübungsmittel und/oder die Verstärkungsfaser mit dem Dispergiermittel in einem üblichen Mischer vermischt. Man verwendet 2-30, insbesondere 10 Gew.% Dispergiermittel und die entsprechende Menge Trübungsmittel. Die Bestandteile dieses Gemischs werden einzeln in den Mischer gegeben. Anschließend wird solange gemischt, bis eine einheitliche Mischung erreicht ist. Die Mischungszeit liegt je nach eingesetztem Material zwischen 5 Sek. und 5 Min., insbesondere in einem Zeitraum von 20-50 Sek. Das dadurch hergestellte Vorgemisch besitzt eine hochfeine, einheitliche Verteilung und weist keine Agglomerate bzw. größere Faserkörper mehr auf. Dieses Vergemisch wird zu der restlichen Isoliermittelmasse zugesetzt, wobei diese ebenfalls bis zu 5 Min., vorzugsweise 20-50 Sek. gemischt wird. Das erhaltene Endgemisch kann beispielsweise aus ca. 60 % pyrogener Kieselsäure und 40 % Vorgemisch bestehen.

In einer bevorzugten Ausführungsform werden zur Bildung des Vorgemischs 10 % pyrogene Kieselsäure, die ebenfalls als Isoliermaterial verwendet wird, und 90 % Trübungsmittel, beispielsweise Ilmenit eingesetzt.

Diese Endmischung wird in einer Presse zu Platten oder Formteilen verpresst und anschließend einer Wärmebehandlung unterzogen, sofern Bindemittel eingesetzt wurde. Falls die Endmischung ohne Bindemittel hergestellt und deshalb vor dem Pressen in einen Sack abgefüllt wurde, wird dieser Sack der Pressbehandlung unterzogen, wobei der Druck im allgemeinen zwischen 0,07 und 21 kg/cm² $(7 \times 10^3 - 2,1 \times 10^6$ Pa) oder auch darüber liegt. Vorteilhafterweise kann zwischen der Presse und dem Isoliermaterial ein Trennmittel vorgesehen sein.

Bei Verwendung eines Bindemittels wird die so gepresste Platte oder Form anschließend einer Wärmebehandlung entweder in einem Ofen oder aber in einer HF- oder Mikrowellenapparatur ausgesetzt.

Das erhaltene Endprodukt weist ausgezeichnete Wärmeisoliereigenschaften auf und kann beispielsweise in Speicheröfen und dergleichen eingesetzt werden.

In der Zeichnung sind Ausführungsbeispiele für den erfindungsgemäßen Wärmeisolierkörper wiedergegeben. Es zeigen

Figur 1 eine schematische Skizze der Herstellung der Vormischung und der Endmischung und

Figur 2 eine schematische Darstellung der gesamten Misch- und Abfüllstation.

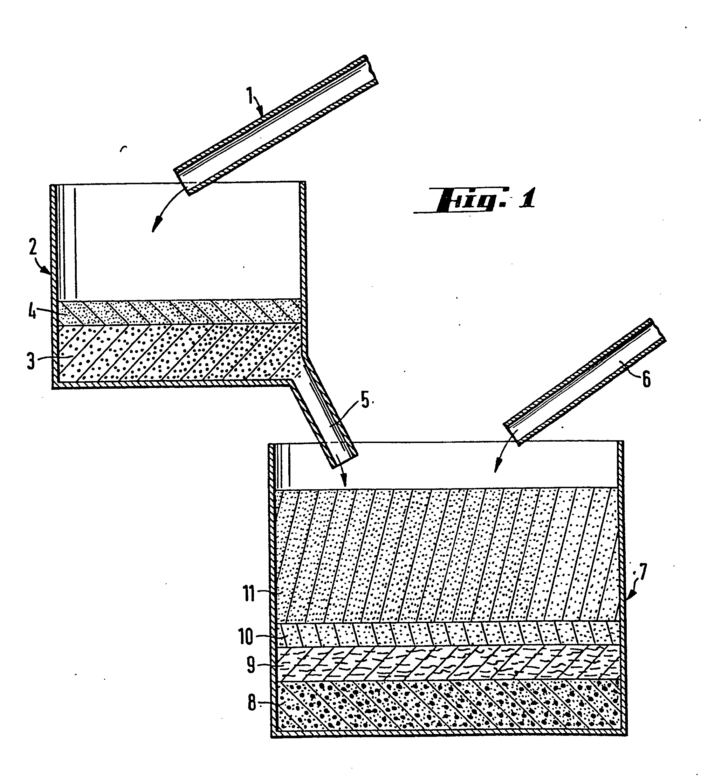

Gemäß der in Fig. 1 gezeigten Skizze werden die zu einem Vorgemisch zu verarbeitenden Materialien über eine Leitung 1 in den Vormischer 2 überführt, wobei das Trübungsmittel 3 und die pyrogene Kieselsäure 4 in Einem zugegeben werden. Dabei spielt die Reihenfolge der Zugabe keine Rolle. Anschließend wird in diesem Vormischer 30-40 Sek., wenn Trübunsmittel eingesetzt wird, und 3-5 Min., wenn Mineralfaserwolle eingesetzt wird, gemischt. Das erhaltene Vorgemisch besteht aus 2-30, vorzugsweise 10 Gew.% Dispergiermittel (pyrogene Kieselsäure), wenn Trübungsmittel vermischt werden soll, und bis zu 50, vorzugsweise 25-30 Gew.% Dispergiermittel, wenn Verstärkungsfaser verwendet wird. Das erhaltene Vorgemisch wird über die Leitung 5 in den Hauptmischer 7 überführt, in den weitere Leitungen, beispielsweise die Leitung 6 für die Zugabe der übrigen Materialien, münden können. Nach dem Einfüllen der Vormischung 8 in den Hauptmischer 7 wird die Verstärkungsfaser 9 und die pyrogene Kieselsäure 10 entsprechend der für die Fasermischung vorstehend angegebenen Menge zugeführt. Die Verstärkungsfaser kann jedoch auch in einem weiteren Vormischer mit der pyrogenen Kieselsäure vermahlen und als weiteres Vorgemisch dem Hauptmischer zugegeben werden. Weiterhin ist es möglich, Trübungsmittel zusammen mit der Verstärkungsfaser in einem Vormischer mit der Kieselsäure zu mischen. Es ist jedoch immer so, daß die vorstehend angegebenen Mengenverhältnisse zu beachten sind, wenn Trübungsmittel und/oder Verstärkungsfaser dispergiert werden sollen. Nach dem Zugeben der restlichen Menge Kieselsäure 11, die den Hauptbestandteil der Mischung betrifft, wird die Endmischung im Hauptmischer 7 nochmals 30-40 Sek. gemischt. Die erhaltene Endmischung wird danach in eine Abfüllstation und anschließend in eine Presse überführt.

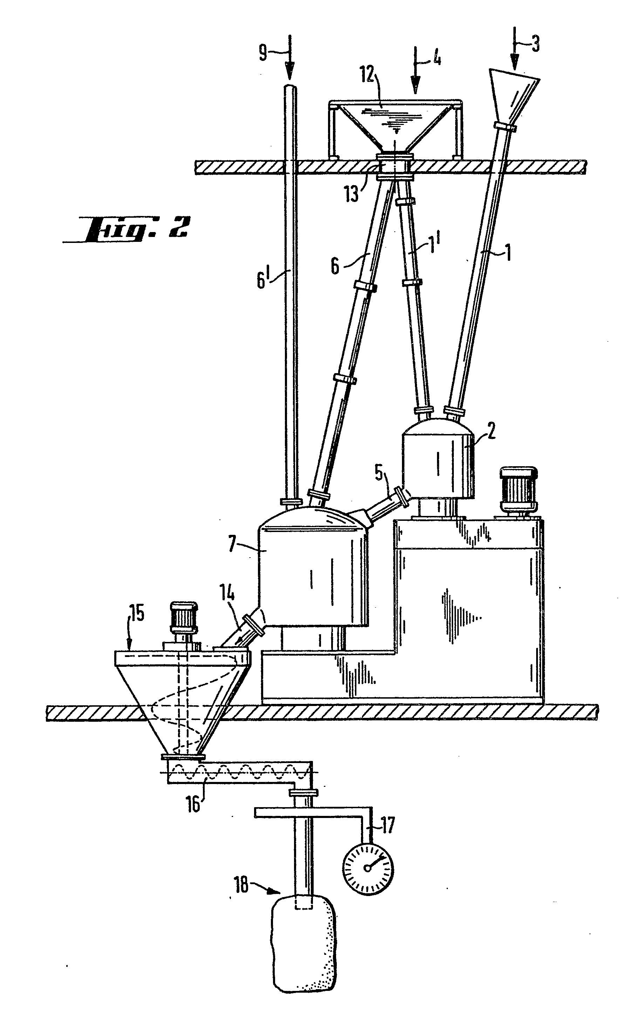

Aus Fig. 2 ist der gesamte Verfahrenslauf bis zur Abfüllstation ersichtlich. Das Trübungsmittel 3 wird über die Leitung 1 in den Vormischer 2 gegeben, während die Kieselsäure 4 über einen Aufgabetrichter 12, der durch eine Schleuse 13 die Leitungen 1' und 6 speisen kann, aufgegeben wird. Über die Leitungen 1 und 1' gelangen also die Vormischungsbestandteile in den Vormischer 2, wo sie anschliessend vermischt werden und über die Leitung 5 nach dem Mischen in den Hauptmischer 7 gelangen. Die Verstärkungsfaser 9 wird über die Leitung 6' und die zur Mischung der Verstärkungsfaser notwendige Kieselsäuremenge wird über die Leitung 6 ebenfalls in den Hauptmischer 7 eingebracht, wo das Vorgemisch 8, die Verstärkungsfaser 9 und die Kieselsäure 10 vermischt werden. Danach wird die restliche Kieselsäure über die Leitung 6 wiederum dem Hauptmischer 7 zugeführt, wo dann das Endgemisch hergestellt wird. Dieses Endgemisch wird über die Ablassleitung 14 in ein Silo 15 überführt, von wo es über einen Schneckenförderer 16 und eine Waage 17 in die Abfüllstation 18 gelangt. Diese Abfüllstation 18 kann direkt in einer Presse vorgesehen sein, sofern kein vorheriges Abfüllen in Säcke erfolgt, die anschließend ebenfalls einer Druckbehandlung in einer Presse ausgesetzt werden. Hinter der Presse ist noch eine Erwärmungsvorrichtung vorgesehen, sofern der Wärmeisolierkörper mit einem auszuhärtenden Bindemittel versehen ist.

**Ansprüche**

1. Verfahren zur Herstellung eines Wärmeisolierkörpers aus einem hochdispersen Isoliermaterial, Trübungsmittel, verstärkendem Fasergemisch und ggfs. einem Bindemittel, wobei diese Materialien gemischt und verfestigt werden, dadurch gekennzeichnet, daß das Trübungsmittel und/oder das verstärkende Fasergemisch mit einem Dispergiermittel zu einem Vorgemisch vermischt werden, welches anschließend mit den restlichen Materialien weiter vermischt wird.

2. Verfahren nach Anspruch 1, dadurch gekennzeichnet, daß man als Trübungsmittel organische oder anorganische Verbindungen einsetzt.

3. Verfahren nach Anspruch 1 oder 2, dadurch gekennzeichnet, daß die Korngröße des Trübungsmittels 0,2-20, vorzugsweise 1-10 µm mit einem Maximum der Häufigkeitsverteilung zwischen 2,5 und 5 µm beträgt.

4. Verfahren nach einem oder mehreren der vorhergenden Ansprüche, dadurch gekennzeichnet, daß man als Trübungsmittel Graphit, Ruß, anorganische Oxide von Titan, Ilmenit, Rutil, Chromoxid, Manganoxid, Eisenoxid, Karbide des Siliciums, Bors, Tantals oder Wolframs oder deren Gemische einsetzt.

5. Verfahren nach Anspruch 4, dadurch gekennzeichnet, daß man als Trübungsmittel Ilmenit FeTiO$_3$ einsetzt, das ggfs. mit Mangan verunreinigt ist.

6. Verfahren nach Anspruch 1, dadurch gekennzeichnet, daß man als verstärkendes Fasergemisch Fasern aus Asbest, Aluminiumsilikat, Mineralfasern oder organischen Fasern einsetzt.

7. Verfahren nach Anspruch 6, dadurch gekennzeichnet, daß man als Fasergemisch ein Aluminiumsilikatfasergemisch einsetzt.

8. Verfahren nach Anspruch 6 oder 7, dadurch gekennzeichnet, daß der Faserdurchmesser in einem Bereich von 1-20, vorzugsweise 5-10 µm liegt.

9. Verfahren nach Anspruch 1, dadurch gekennzeichnet, daß man als Dispergiermittel hydrophobierte oder pyrogene Kieselsäure einsetzt.

10. Verfahren nach Anspruch 9, dadurch gekennzeichnet, daß die Korngröße des Dispergiermittels unter 1 µm liegt.

11. Verfahren nach einem oder mehreren der vorhergehenden Ansprüche 1-10, dadurch gekennzeichnet, daß das Gewichtsverhältnis Dispergiermittel/Trübungsmittel in einem Bereich von 2 : 98-30 : 70, insbesondere 10 : 90 liegt.

12. Verfahren nach einem oder mehreren der vorhergehenden Ansprüche 1-10, dadurch gekennzeichnet, daß dem zu einem Vorgemisch zu verarbeitenden Fasergemisch bis zu 50, vorzugsweise 25-30 Gew.% Dispergiermittel zugesetzt werden.

13. Verfahren nach einem oder mehreren der vorhergehenden Ansprüche 1-12, dadurch gekennzeichnet, daß das Trübungsmittel bereits vor dem Mahlen mit Dispergiermittel versetzt wird, wobei beim Mahlen bereits ein Vorgemisch erzeugt wird.

**Claims**

1. A process for making a thermal insulating body from highly dispersed insulating material, opacifier, reinforcing fiber mix and, if desired, a binder, these materials being mixed together and then compacted, characterised in that the opacifier and/or the reinforcing fiber mix are mixed with a dispersant for forming a first-stage mix, which is then further mixed with the rest of the materials.

2. A process as claimed in claim 1, characterised by the use of an organic or inorganic compound as an opacifier.

3. A process as claimed in claim 1 or claim 2, characterised in that the grain size of the opacifier is 0.2 to 20 and, preferably, 1 to 10 microns with a maximum of the frequency distribution between 2.5 and 5 microns.

4. A process as claimed in anyone or more of claims 1 to 3, characterised by the opacifier comprising graphite, carbon black, inorganic oxides of titanium, ilmenite, rutile, chromium oxide, manganese oxide, iron oxide, carbides of silicon, boron, tantalum or tungsten or mixtures thereof.

5. A process as claimed in claim 1, characterised by the use of ilmenite (FeTiO₃) as an opacifier, the ilmenite possibly being contaminated with manganese.

6. A process as claimed in claim 1, characterised by the reinforcing fiber mix comprising asbestos fibers, aluminium silicate, mineral fibers or organic fibers.

7. A process as claimed in claim 6, characterised by the use of an aluminium silicate fiber mix as the fiber mix.

8. A process as claimed in claim 6 or claim 7, characterised by a fiber diameter in a range of 1 to 20, preferably 5 to 10 microns.

9. A process as claimed in claim 1, characterised by the use of a dispersant in the form of hydrophobised or pyrogenic silicic acid.

10. A process as claimed in claim 9, characterised in that the grain size of the dispersant is under 1 micron.

11. A process as claimed in any one or more of claims 1 to 10, characterised by a dispersant/opacifier weight ratio in the range 2 : 98 to 30 : 70, and especially 10 : 90.

12. A process as claimed in any one or more of claims 1 to 10, characterised in that, to the fiber mix which is to be processed into a first-stage mix, up to 50, preferably 25 to 30 % weight of dispersant is added.

13. A process as claimed in any one or more of claims 1 to 12, characterised in that the opacifier is already mixed with dispersant before milling, so that a first-stage mix is already produced on milling.

**Revendications**

1. Procédé de préparation d'un corps isolant de la chaleur à partir d'une matière isolante à haute dispersion, d'un agent opacifiant, d'un mélange fibreux renforçant et le cas échéant d'un liant, dans lequel ces matières sont mélangées et solidifiées, caractérisé en ce que l'on mélange l'agent opacifiant et/ou le mélange fibreux renforçant avec un agent dispersant sous forme d'un pré-mélange qu'on mélange ensuite avec les constituants restants.

2. Procédé selon la revendication 1, caractérisé en ce que l'on utilise en tant qu'agents opacifiants des composés organiques ou minéraux.

3. Procédé selon la revendication 1 ou 2, caractérisé en ce que la dimension de grain de l'agent opacifiant est de 0,2 à 20, de préférence de 1 à 10 microns, avec un maximum de la répartition de fréquence entre 2,5 et 5 microns.

4. Procédé selon une ou plusieurs des revendications qui précèdent, caractérisé en ce que l'on utilise en tant qu'agent opacifiant du graphite, du noir de carbone, des oxydes minéraux du titane, de l'ilménite, du rutile, de l'oxyde de chrome, de l'oxyde de manganèse, de l'oxyde de fer, des carbures du silicium, du bore, du tantale ou du tungstène ou leurs mélanges.

5. Procédé selon la revendication 4, caractérisé en ce que l'on utilise en tant qu'agent opacifiant l'ilménite FeTiO₃ contenant éventuellement du manganèse en impureté.

6. Procédé selon la revendication 1, caractérisé en ce que l'on utilise en tant que mélange fibreux renforçant des fibres d'amiante, de silicate d'aluminium, des fibres minérales ou des fibres organiques.

7. Procédé selon la revendication 6, caractérisé en ce que l'on utilise en tant que mélange fibreux un mélange de fibres de silicate d'aluminium.

8. Procédé selon la revendication 6 ou 7, caractérisé en ce que le diamètre des fibres se situe dans l'intervalle de 1 à 20, de préférence de 5 à 10 microns.

9. Procédé selon la revendication 1, caractérisé en ce que l'on utilise en tant qu'agent dispersant de la silice hydrofugée ou pyrogène.

10. Procédé selon la revendication 9, caractérisé en ce que la dimension de grain de l'agent dispersant est inférieure à 1 micron.

11. Procédé selon une ou plusieurs des revendications précédentes 1 à 10, caractérisé en ce que les proportions relatives en poids agent dispersant/agent opacifiant se situent dans l'intervalle de 2 : 98 à 30 : 70, et plus spécialement à 10 : 90.

12. Procédé selon une ou plusieurs des revendications qui précèdent 1 à 10, caractérisé en ce que l'on ajoute jusqu'à 50, de préférence de 25 à 30 % en poids d'agent dispersant au mélange fibreux à transformer en un pré-mélange.

13. Procédé selon une ou plusieurs des revendications qui précèdent 1 à 12, caractérisé en ce que l'on ajoute l'agent dispersant à l'agent opacifiant avant le broyage, de sorte que le broyage provoque déjà la formation d'un pré-mélange.

*Fig. 1*

Fig. 2